# EUROPEAN PATENT SPECIFICATION

(11) **EP 3 473 950 B1**
(45) Date of publication and mention of the grant of the patent: **22.03.2023**
(21) Application number: 18199680.2
(22) Date of filing: 10.10.2018
(51) Int. Cl.: F25B 31/00, F25B 47/02, F25B 49/02, F25B 5/02, F25B 40/00

(54) **THERMODYNAMIC SYSTEM, MACHINE COMPRISING THE THERMODYNAMIC SYSTEM AND THERMAL TREATMENT METHOD**
THERMODYNAMISCHES SYSTEM, MASCHINE MIT DEM THERMODYNAMISCHEN SYSTEM UND WÄRMEBEHANDLUNGSVERFAHREN
SYSTÈME THERMODYNAMIQUE, MACHINE COMPRENANT LE SYSTÈME THERMODYNAMIQUE ET PROCÉDÉ DE TRAITEMENT THERMIQUE

(30) Priority: 17.10.2017 IT 201700117130
(43) Date of publication of application: 24.04.2019
(73) Proprietor: Ali Group S.r.l. - Carpigiani, 20063 Cernusco sul Naviglio, Milano (IT)
(72) Inventor: COCCHI, Andrea, 40012 CALDERARA DI RENO (IT); LAZZARINI, Roberto, 42100 REGGIO EMILIA (IT)
(74) Representative: Milli, Simone

(56) References cited:
- EP-A1- 3 147 601
- EP-A2- 1 039 250
- US-A1- 2003 037 553

## Description

This invention addresses the field of machines for making liquid or semi-liquid food products.

More specifically, this invention relates to a thermodynamic system, a machine for making liquid and semi-liquid products, comprising the system, and a thermal treatment method.

In the sector of machines for making liquid and semi-liquid products such as ice creams, cake and pastry fillings and the like, it is standard practice to thermally treat a product (by heating and/or cooling) in order to make a predetermined recipe.

Known in the prior art are a plurality of thermal systems of thermodynamic type which allow a product to be thermally treated (heated or cooled) in a container in order to modify its food / organoleptic properties.

Most thermodynamic systems for cooling are based on the inverse Carnot cycle (also known as saturated vapour compression cycle): these systems allow a container to be cooled by means of a thermodynamic circuit operating on a heat exchanger fluid and comprise a pair of exchangers (evaporator and condenser), a compressor and a throttle element, with the heat exchanger fluid flowing through all of them.

Generally speaking, these systems use compressors of the type known as "sealed" compressors, consisting of a casing which encloses the electric motor and the compression parts acting on the refrigerant fluid.

More precisely, a compressor of this type typically has a containment casing which is sealed by welding, preventing access to all the parts inside it for repair or replacement purposes. In particular, the motor which allows the fluid to be compressed is housed inside the casing and thus exposed to direct contact with the flow of refrigerant fluid in the intake cavity.

Exposure of the motor in general, and of the winding in particular, as well as of the motor oil, to the physical temperature and pressure conditions created by the inflowing heat exchanger fluid constitutes an evident drawback in the operation of the compressor and a limitation on the size of the system, especially if the thermodynamic system can operate according to what is known as a hot gas cycle, where the compressor, in practice, acts as a heating element for heating the heat exchanger fluid.

Exposing the compressor to a particularly hot heat exchanger fluid significantly reduces the working life of the compressor (affecting both the mechanical and electrical components, including the compressor oil).

In effect, during operation of the system, the temperature inside the compressor increases, and at times quite considerably, rising to as much as 130°C and over, causing rapid wear and reducing the working life of the components, in particular of the electric motor and oil.

Document EP3147601 discloses a refrigeration device which includes a blow-out temperature detector that detects the blow-out temperature of air blown out into the interior of the device, a cargo temperature detector that detects the temperature of a cargo, an operation controller that performs cooling control of the interior on the basis of the detection temperature from the blow-out temperature detector and the detection temperature from the cargo temperature detector, a storage unit that stores a first set temperature as a control target value for the blow-out temperature and a cargo target temperature as a target value for the temperature of the cargo, and a time measurement unit that measures a treatment time elapsed for low-temperature treatment of the cargo. The operation controller is configured to control the refrigerant circuit so that the blow-out temperature approaches the first set temperature.

In this context, the technical purpose which forms the basis of the present invention is to propose a thermodynamic system which overcomes the above mentioned disadvantages of the prior art.

In particular, this invention has for an aim to provide a thermodynamic system which allows thermally treating a liquid or semi-liquid food product and which can guarantee operation under optimum conditions in order to reduce wear and maximize the working life (in particular of the compressor).

The technical purpose indicated and the aims specified are substantially achieved by a thermodynamic system comprising the technical features described in one or more of the appended claims and by a method for thermally treating a liquid or semi-liquid food product.

Another object of this invention is a machine for making liquid or semi-liquid food products:
Another object of this invention is a method for thermally treating a liquid or semi-liquid food product according to the appended claims.

Further features and advantages of the invention are more apparent in the detailed description below, with reference to a preferred, non-limiting, embodiment of a thermodynamic system as illustrated in the accompanying drawings, in which:
- Figure 1 schematically illustrates a first possible embodiment of a thermodynamic system according to this invention;
- Figure 2 schematically illustrates a second possible embodiment of a thermodynamic system not belonging to this invention;
- Figure 3 schematically illustrates a third possible embodiment of a thermodynamic system not belonging to this invention;
- Figure 4 schematically illustrates a fourth possible embodiment of a thermodynamic system according to this invention;

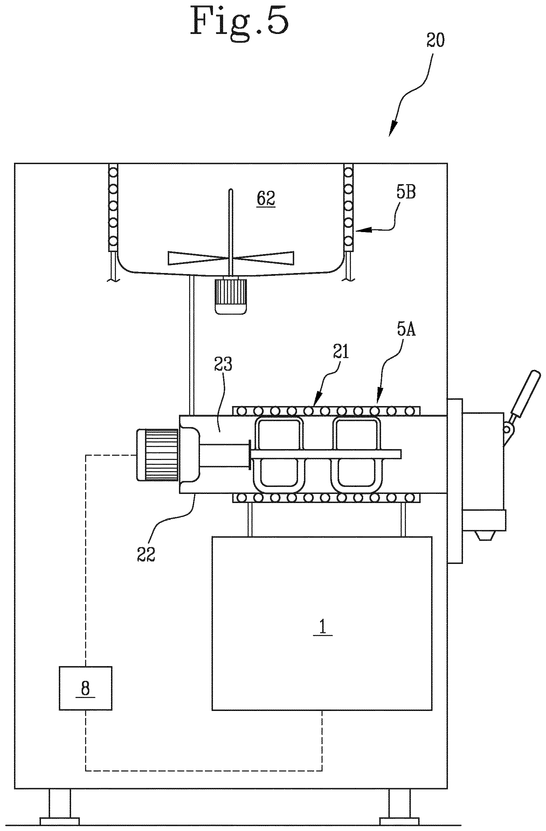

- Figure 5 is a schematic view of a machine for making liquid or semi-liquid products and to which the thermodynamic system illustrated in the preceding figures can be applied.

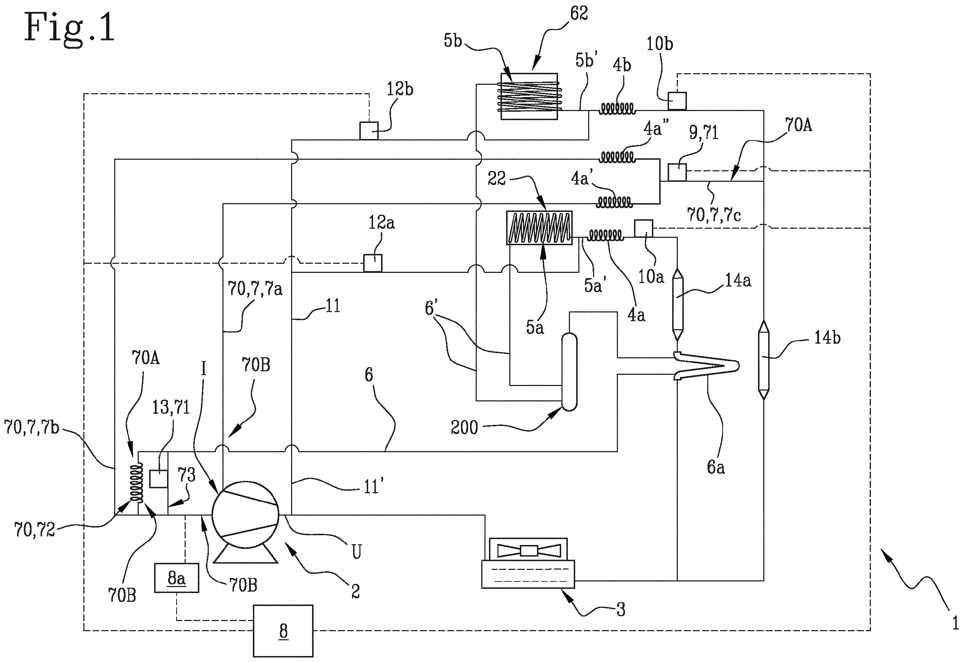

The numeral 1 in Figures 1-4 denotes a thermodynamic system.

The thermodynamic system 1 is applicable to a machine 20 for thermally treating liquid or semi-liquid food products, either hot or cold, such as, for example, gelato, soft ice cream, yogurt, chocolate, sorbets, savoury soups.

More specifically, this invention relates to a thermodynamic system 1 for cooling or heating at least a first container 22 containing food products of the liquid or semi-liquid type.

According to the invention, the thermodynamic system for cooling or heating at least a first container 22 containing food products of the liquid or semi-liquid type, comprises a circuit employing a heat exchanger fluid and having at least:
- a compressor 2 having at least one inlet I for the heat exchanger fluid and one outlet U for the heat exchanger fluid;
- a first heat exchanger 3 connected to the outlet U of the compressor 2;
- at least one first expansion element 4a (more generally speaking expansion means or member 4a) connected to the outlet of the first heat exchanger 3;

- a second heat exchanger 5a which can be associated with the first container 22 and which has an inlet 5a' connected to the outlet of the at least one first expansion element 4a;
- a return duct 6 having an inlet portion 6' connected to an outlet of the second heat exchanger 5a and an outlet portion connected to the inlet I of the compressor 2.

It should be noted that the first container 22 may be a container of any kind, such as a cylinder, a tub, etc.

According to the invention, the system 1 also comprises a device 70 for reducing the temperature of the heat exchanger fluid, associated with the circuit for receiving at least a portion of the heat exchanger fluid, having an inlet 70A and an outlet 70B and configured to reduce the temperature of the heat exchanger fluid flowing between its inlet 70A and its outlet 70B, the outlet 70B being connected in proximity to the heat exchanger fluid inlet I of the compressor 2 or inside the compressor 2.

The system 1 also comprises means 71 for regulating the flow of the heat exchanger fluid traversing the temperature reducing device 70, acting on the flow of the heat exchanger fluid in transit through the device 70 for reducing the temperature of the heat exchanger fluid between a minimum flow configuration (which may be zero or a value greater than zero) and a maximum flow configuration (a value greater than zero).

The system 1 further comprises a control and drive unit 8 operating on the flow regulating means 71 in order to drive them (to regulate the flow between the minimum flow and the maximum flow configuration).

Preferably, the minimum flow is zero, that is to say, when the means 71 for regulating the flow of the heat exchanger fluid traversing the temperature reducing device 70 are set to the minimum flow configuration, the flow traversing the temperature reducing device 70 is zero (no flow).

Under these conditions, therefore, the means 71 for regulating the flow through the temperature reducing device 70 allow turning the flow of fluid through the temperature reducing device 70 ON and OFF (on an "all or nothing" basis).

Described below are some modes of implementing the temperature reducing device 70, which are all shown together in Figure 1, it being understood, however, that each implementation mode can be used individually (without necessarily being combined or coupled with the others).

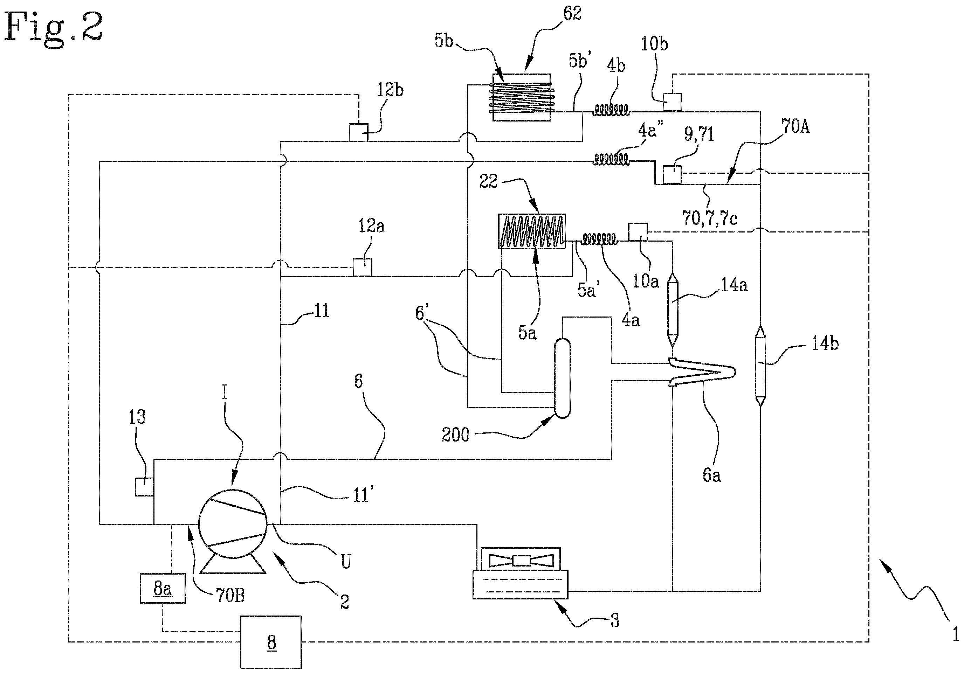

In this regard, Figures 2 to 4 each illustrate a mode of implementing the temperature reducing device 70 individually.

According to one aspect, the circuit employing a heat exchanger fluid is configured to be switched between a configuration for carrying out a hot gas thermodynamic cycle for heating the first container 22 and a thermodynamic, inverse Carnot cycle (saturated vapour compression cycle) for cooling the first container 22.

In practice, the thermal system of Figure 1 is reversible, since it can operate in a first configuration (hot gas) to heat the first container 22, and in a second configuration (vapour compression cycle) to cool the first container 22.

According to one aspect, the thermal system 1 also comprises:
- a duct 11 for carrying out a hot-gas thermodynamic cycle and having an inlet portion 11' connectable to an outlet U of the compressor 2 to receive the heat exchanger fluid and an outlet portion connectable to the inlet of the second heat exchanger 5a,
- at least one selective closing element (12a, 12b) operatively associated with the duct 11 for carrying out a hot-gas thermodynamic cycle and configured to close or open the duct 11 so as to inhibit or enable the heat exchanger fluid to circulate inside it, and wherein the control and drive unit 8 is configured to act on the selective closing element (12a, 12b) to drive it between a duct 11 closed configuration and a duct 11 open configuration.

It should be noted that the presence of the duct 11 makes it possible to implement the hot gas cycle and the presence of the selective closing element (12a, 12b) makes it possible to enable this (hot gas) mode of operation of the thermodynamic system.

More precisely, when the duct 11 is closed, the hot gas operating mode is on.

Described below is a first mode of implementing the device 70 for reducing the temperature of the heat exchanger fluid flowing into the compressor 2. This is shown in Figure 1 and, as stated above, might also be implemented individually in the thermal system (which, in such a case, might be without one or more of the branches 7a, 7b and 7c).

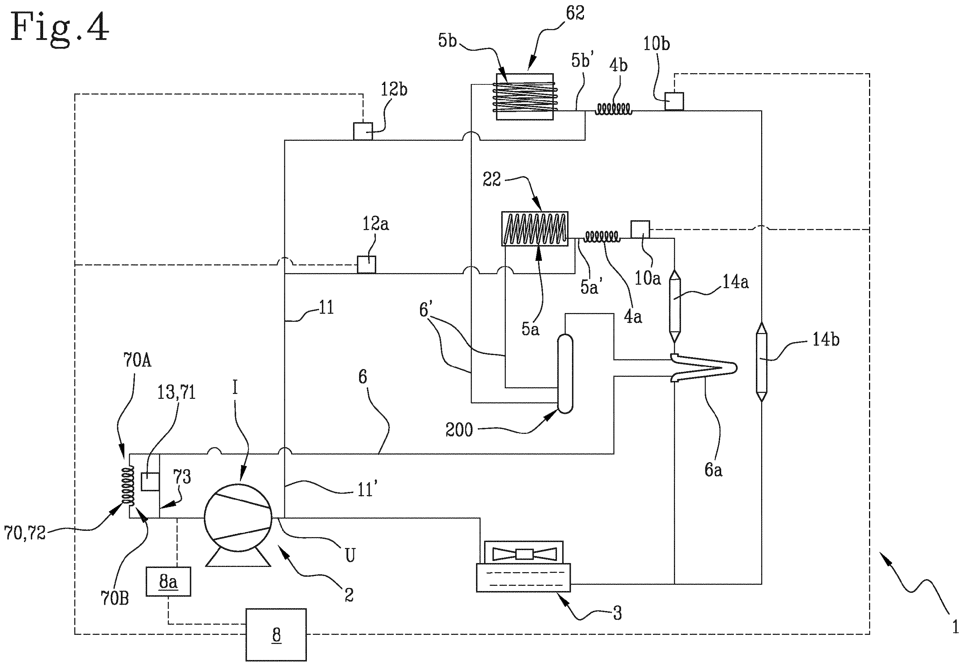

### This first embodiment is illustrated individually in Figure 4

In this embodiment, the device 70 for reducing the temperature of the heat exchanger fluid comprises a pressure reducing element 72 (or an expansion element 72) and the means 71 for regulating the flow in the temperature reducing device 70 comprise a valve 13 acting on a branch 73 of the circuit parallel to the pressure reducing element 72 to close or open the branch 73 of the circuit parallel to the pressure reducing element 72.

It should be noted that the pressure reducing element 72 is preferably a throttle element (for example, a capillary or a narrow section tubular device).

The pressure reducing element 72 is disposed along the return duct 6, upstream of the compressor 2.

Similarly, the valve 13, acting on a branch 73 of the circuit which is connected in parallel to the pressure reducing element 72, is disposed along the return duct 6, upstream of the compressor 2.

It should be noted that when the valve 13 is in the open configuration, most of the heat exchanger fluid flows through the branch 73, because the load loss in the branch 73 is less than that in the pressure reducing element 72.

It follows that when the valve 13 is in the closed configuration, the heat exchanger fluid flowing along the return duct 6 flows through the pressure reducing element 72 because it is prevented from flowing through the branch 73.

Thus, if the system 1 is operating on a hot gas thermodynamic cycle, the valve 13 can be closed to allow cooling the heat exchanger fluid flowing into the compressor 2. Closing the valve 13 causes part of the heat exchanger fluid flowing through the pressure reducing element 72 to expand and cool so that when it reaches the inlet I of the compressor 2, it is at a low temperature (certainly lower than that of the components of the compressor 2).

It is thus possible to run the compressor 2 on a cooling cycle by closing the valve 13.

According to this aspect, the control and drive unit 8 is configured to drive the valve 13 into a configuration for closing the branch 73 of the circuit parallel to the pressure reducing element 72 to cool the compressor 2.

It should also be noted that for the purposes of this disclosure, turning a valve on or off means that the drive and control unit 8 is configured to operate on the valve in such a way as to cause it to be opened or closed.

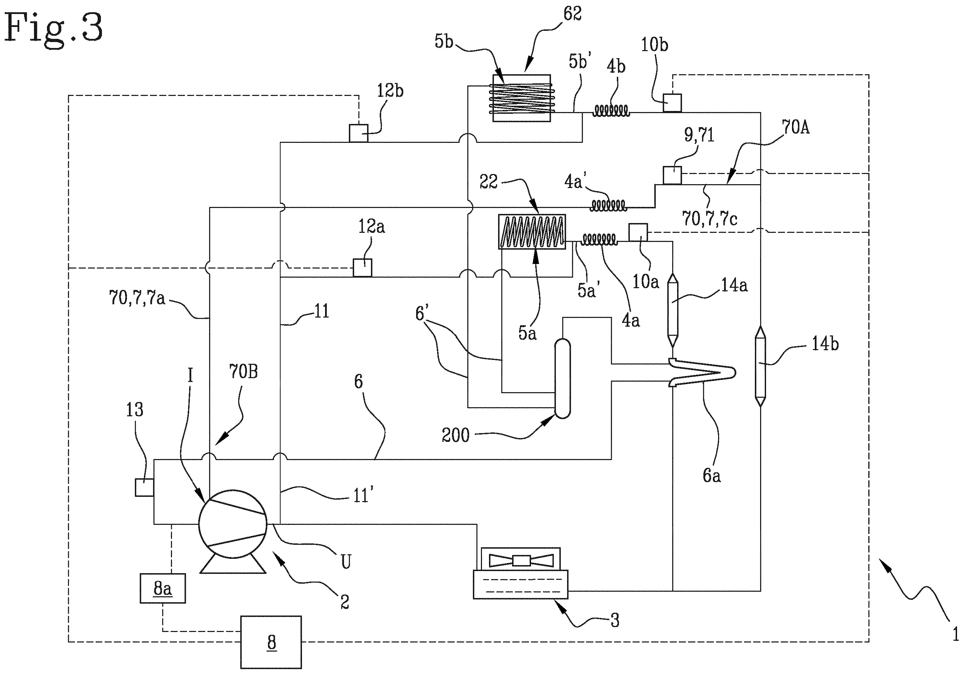

A second mode of implementing the temperature reducing device 70, also represented in Figure 1, as well as in Figures 2 and 3, is now described below.

It should be noted that this mode of implementing the temperature reducing device 70 might also be implemented individually (as shown in Figures 2 and 3), that is to say, without the first embodiment, although Figure 1 shows it in combination with the first embodiment. According to this implementation mode, the temperature reducing device 70 comprises a bypass duct 7 which has an inlet portion connected to an outlet of the first heat exchanger 3 to receive the heat exchanger fluid from the first heat exchanger 3 and at least one outlet portion 7a, 7b connected to the heat exchanger fluid inlet I of the compressor 2 or (directly) inside the compressor 2.

In practice, the bypass duct 7 connects the outlet of the first exchanger 3 to the inlet I of the compressor.

The bypass duct 7 preferably accommodates an expansion element 4a' adapted to allow the fluid to expand.

The means 71 for regulating the flow through the temperature reducing device 70 comprise a valve 9. The valve 9 is adapted to close or open the bypass duct 7 to enable or inhibit the circulation of the fluid in the duct.

According to another aspect, the bypass duct 7 has a first (outlet) portion 7a connected inside the compressor 2 to release at least a portion of the heat exchanger fluid flowing out of the bypass duct 7 inside the compressor 2 and a second outlet portion 7b connected to an end portion of the return duct 6 to release a portion of the heat exchanger fluid flowing out of the bypass duct 7 at the heat exchanger fluid inlet I of the compressor 2.

It should be noted that the portions 7a and 7b of the bypass duct 7 are disposed substantially in parallel, that is to say, they define two parallel branches of the bypass duct 7.

In practice, the bypass duct 7 allows the heat exchanger fluid in transit through it to be released at two points: into the return duct 6 at the inlet I of the compressor 2; and directly inside the compressor 2. The heat exchanger fluid released by the bypass duct 7 may be a vapour (having a liquid component) or a liquid. Preferably, the heat exchanger fluid is a (saturated) vapour).

It should be noted that injecting a fluid at a low temperature through the bypass duct 7 at the inlet and/or directly into the compressor 2 causes the compressor to cool: in effect, the fluid from the bypass duct 7 removes heat from the components of the compressor 2. Cooling in this way is particularly advantageous when the system is operating on a hot gas cycle, where the compressor 2 is subjected to strong thermal stress.

In a particularly advantageous manner, as will become clearer as this description continues, the bypass duct 7 allows conveying and releasing fluid at a low temperature to the compressor 2 so that the fluid can remove heat from the components of the compressor 2.

As explained in more detail below, thanks to the innovation of the bypass branch 7, the temperature of the components of the compressor 2 remains limited at all times, preferably less than 100°C (even in the case of use on a hot gas cycle).

The bypass duct 7 can be turned on and/or off to cool the compressor 2 both during operation of the system on the hot gas thermodynamic cycle and during operation of the system on the saturated vapour thermodynamic cycle (inverse Carnot cycle).

The bypass duct 7 is configured to withdraw at least a portion of the heat exchanger fluid (in the liquid state at high pressure) flowing out of the heat exchanger 3 and to convey it into the inlet "I" of the compressor 2 (after reducing the pressure / temperature accordingly) and/or into an intake cavity of the compressor 2. The heat exchanger fluid (thanks to its relatively low temperature) absorbs thermal energy from the hotter components of the compressor 2, thereby reducing the temperature of the compressor 2, that is to say, cooling it.

This advantageously reduces the thermal stress the compressor 2 is subjected to, thus increasing its working life accordingly.

To allow correct functioning of the compressor 2, the bypass duct 7 has, at an inlet portion of it, at least one expansion element 4a' which enables the heat exchanger fluid to expand in such a way as to reduce its temperature so as to allow it to carry out a process for cooling the compressor 2.

More specifically, the bypass duct 7 has an inlet portion 7c.

The inlet portion 7c is connected to an outlet of the first heat exchanger 3 to receive the heat exchanger fluid.

The outlet portion 7a is connected directly to the inside of the compressor 2, more precisely to an (intake) cavity inside the compressor 2.

The portion 7b of the bypass duct 7 is associated with a respective additional expansion element 4a" and is connected to an (end) portion of the return duct 6, where the heat exchanger fluid flows into the compressor 2.

Thanks to the portion 7b of the bypass duct 7, the (cool) heat exchanger fluid can be conveyed to the intake flow of the compressor 2, so as to also optimally cool the inlet portions of the compressor 2. According to another aspect, the bypass valve 9 disposed in the bypass duct 7 is connected to the drive and control unit 8 so that it can be turned on or off to open or close the bypass duct 7 in order to vary the flow of heat exchanger fluid in the bypass duct 7. Preferably, the bypass valve 9 is driven to fully close or fully open the bypass duct 7, thereby inhibiting or enabling circulation of the heat exchanger fluid in the bypass duct 7.

It should be noted therefore that the flow rate of the heat exchanger fluid in the bypass duct 7 can be increased, to cool the compressor 2, either during operation of the system on the hot gas cycle or during operation of the system on the vapour compression cycle (inverse Carnot cycle).

More specifically, the bypass duct 7 can be opened, to allow the heat exchanger fluid to circulate in the duct so as to cool the compressor, either during operation of the system on the hot gas cycle or during operation of the system on the vapour compression cycle (inverse Carnot cycle).

It should be noted that in the bypass duct 7, the heat exchanger fluid undergoes expansion (thanks to an expansion element 4a' and an additional expansion element 4a") which reduces its temperature and allows it reach the compressor 2 at an optimum temperature for cooling.

It should be noted that the bypass duct 7 might comprise only the first outlet portion 7a or only the second outlet portion 7b or both, as illustrated in Figure 1.

Advantageously, the bypass duct may be open to cool the compressor both during operation of the thermodynamic system on a hot gas cycle (where the product inside the container 22 is heated) and during operation of the system on what is known as a vapour compression thermodynamic cycle (where it is cooled).

In practice, advantageously, injecting the fluid at a low temperature into the inlet or into the inside of the compressor 2 causes the fluid to remove heat from the compressor 2.

Described below are some aspects common to all the embodiments of the temperature reducing device 70.

According to one aspect, the drive and control unit 8 comprises a measuring device 8a adapted to detect a triggering parameter, the drive and control unit 8 being configured to regulate the means 71 for regulating the flow of heat exchanger fluid traversing the temperature reducing device 70 as a function of the value of the triggering parameter captured by the measuring device 8a.

The triggering parameter may be any physical quantity (pressure, temperature) or combination of physical quantities.

If the measuring device 8a of the drive and control unit 8 detects that a certain triggering parameter has been reached or exceeded, the control and drive unit 8 turns on the bypass valve 9 (driving it to the open configuration), thereby allowing a bypass cycle to be started, which may be performed simultaneously with, or alternatively to, the thermodynamic cycle in progress (hot gas cycle or inverse Carnot cycle).

According to another aspect, the measuring device 8a comprises a temperature sensor and the triggering parameter is a temperature value detected near the compressor 2 or inside the compressor 2. Preferably, according to this aspect, the bypass branch 7 is opened, or more generally speaking, the flow in the bypass branch 7 is set to a maximum value, based on the temperature detected by the temperature sensor.

According to a non-limiting aspect, if the temperature is greater than a first threshold, the bypass branch 7 is opened, if it is less than a second threshold (which may or may not coincide with the first) the bypass branch 7 is closed.

According to another aspect, the measuring device 8a comprises a temperature sensor and the triggering parameter is a value of the temperature of the heat exchanger fluid at the outlet portion of the return duct 6 connected to the inlet I of the compressor 2.

According to another aspect, the measuring device 8a is a timer and the triggering parameter comprises a time interval.

According to this aspect, the measuring device 8a is a timer and the triggering parameter is a time interval or a time slot, that is, a predetermined period of time depending on the operating needs of the thermodynamic system 1.

The above allows automating the opening and closing of the bypass duct 7.

Described below are other aspects, with reference to the accompanying drawings.

According to one aspect, the system comprises a first cooling valve 10a interposed between the second heat exchanger 5a and the first heat exchanger 3 and connected to the drive and control unit 8 so that it can be turned on or off to open or close the inlet portion 5a' of the second heat exchanger 5a to allow performing a thermodynamic, inverse Carnot cycle.

It should be noted that the first cooling valve 10a is turned on (in the open configuration) when the (product inside the) container 22 needs to be cooled: in effect, opening the first cooling valve 10a causes a thermodynamic inverse Carnot cycle to be carried out between the compressor 2, the first exchanger 3, the pressure reducing element 4a and the second exchanger 5a (this cycle also involves the return duct 6).

According to another aspect, the at least one selective closing element (12a, 12b), operatively associated with the duct 11 for carrying out a hot-gas thermodynamic cycle, comprises a first heating valve 12a disposed downstream of the compressor 2 and connected to the drive and control unit 8 so that it can be turned on or off to open or close the outlet portion of the hot-gas duct 11 connectable to the inlet of the second heat exchanger 5a.

In practice, opening the first heating valve 12a causes a hot gas thermodynamic cycle to be carried out which involves the compressor 2 and the second exchanger 5a (this cycle also involves the return duct 6).

According to another aspect, the circuit further comprises a third heat exchanger 5b which can be associated with at least one second container 62 for containing a liquid or semi-liquid product, the third heat exchanger 5b being disposed substantially parallel to the second heat exchanger 5a between the first heat exchanger 3 and the compressor 2.

It is stressed that the third heat exchanger 5b and the second container 62 (where the first container is the container 22) are optional.

Advantageously, the presence of two or more heat exchangers 5a, 5b which can be associated with respective containers, allows carrying out different processes on different products using cycles with special temperature requirements simultaneously, or performing a succession of process steps on the same product requiring different process temperatures, using a single thermodynamic system 1.

According to another aspect, the system comprises at least one second expansion element 4b disposed at the outlet of the first heat exchanger 3, and the third heat exchanger 5b has an inlet portion 5b' connected to an outlet of the at least one second expansion element 4b.

According to another aspect, the system comprises a second cooling valve 10b interposed between the third heat exchanger 5b and the first heat exchanger 3.

It should be noted that the second cooling valve 10b is turned on (in the open configuration) when the (product inside the) second container 62 needs to be cooled: in effect, opening the second cooling valve 10b causes a thermodynamic inverse Carnot cycle to be carried out between the compressor 2, the first exchanger 3, the second pressure reducing element (second expansion element) 4b and the third exchanger 5b (this cycle also involves the return duct 6).

According to another aspect, the at least one selective closing element (12b, 12b) comprises a second heating valve 12b disposed downstream of the compressor 2 and connected to the drive and control unit 8 so that it can be turned on or off to open or close the outlet portion of the hot-gas duct 11 connectable to the inlet of the third heat exchanger 5b.

In practice, opening the second heating valve 12b causes a hot gas thermodynamic cycle to be carried out which involves the compressor 2 and the third exchanger 5b (this cycle also involves the return duct 6); the purpose of this cycle is to release heat to the third exchanger 5b.

Described below are further aspects and details of the system 1.

It should be noted that the return duct 6 has, along its path, a heat exchanger 6a configured to define a heat exchange portion (in the absence of mixing) between two (countercurrent) flows of heat exchanger fluid flowing through them.

More precisely, a first flow travels along the return duct 6 (from the second exchanger 5a to the compressor 2) and a second flow travels from the heat exchanger 3 to the second exchanger 5a (and also towards the first expansion element 4a).

In other words, the heat exchanger fluid (at a higher temperature) flowing out of the first heat exchanger 3, before passing through the first expansion element 4a, exchanges heat with a flow of heat exchanger fluid flowing out of the second heat exchanger 5a, and thus at a lower temperature than the flow of heat exchanger fluid flowing out of the first heat exchanger 3.

The presence of the heat exchange portion allows an intermediate heat exchange to be carried out in such a way that a flow of heat exchanger fluid flowing out of the first heat exchanger 3 comes into contact with a fluid which is cooler and thus undergoes an initial cooling process.

The overall efficiency of the thermodynamic system 1 can thus be improved by starting to cool the heat exchanger fluid before it enters the first expansion element 4a. This is particularly important where the container 22 is a container intended for processing iced products, such as ice cream, or the like.

In a preferred embodiment, the thermodynamic system 1 also comprises filters 14a, 14b which allow the heat exchanger fluid to be kept clean by removing any impurities which may have accumulated in the fluid during the cooling or heating cycles, especially when it flows through the compressor 2.

As shown in detail in Figure 1, a first filter 14a is disposed downstream of the first heat exchanger 3 and upstream both of the first cooling valve 10a and of the bypass valve 9.

Similarly, the second filter 14b is disposed downstream of the first heat exchanger 3 and upstream of the second cooling valve 10b. Described below for the sake of completeness is the operation of the thermodynamic system when it operates on a vapour compression cycle (inverse Carnot cycle), with reference to the container 22.

The heat exchanger fluid is compressed in the compressor 2 which causes its pressure to increase.

The compressed heat exchanger fluid then reaches the first heat exchanger 3, in this case acting as a condenser, which allows an exchange of thermal energy between the outside atmosphere and the (heated) heat exchanger fluid.

The heat exchanger fluid, by flowing into the first heat exchanger 3, is thus cooled and condenses, passing from gas to liquid state. Thus, the fluid flowing out of the exchanger 3 is a liquid at high pressure.

Downstream of the first heat exchanger 3, the heat exchanger fluid in the liquid state flows through the expansion element 4a (or, more generally speaking, a pressure reducing element 4a) which consists for example of a throttle valve, the expansion element 4a allowing expanding - lowering the pressure of - the heat exchanger fluid (thus bringing it to a lower temperature).

Lastly, the heat exchanger fluid flows through the second heat exchanger 5a which, in this case, acts as an evaporator; inside the second heat exchanger 5a, the heat exchanger fluid, by passing from liquid to vapour state, absorbs thermal energy, hence heat, for example from the container 22 which the second heat exchanger 5a is associated with (that is, from the product inside the container 22). In the second heat exchanger 5a, the heat exchanger fluid passes from the liquid to the vapour state.

After the second heat exchanger 5a, the heat exchanger fluid flows through an element, labelled 200, which is a liquid - vapour phase separator.

Downstream of the phase separator 200, still along the return duct 6, the heat exchanger fluid is made to flow through the exchanger labelled 6a, where it exchanges heat with a flow of heat exchanger fluid directed from the first heat exchanger 3 to the second heat exchanger 5a.

At this point, the heat exchanger fluid flows right through the return duct 6 to reach the valve 13 and the branch 73, the branch 73 being that which the heat exchanger fluid flows through if the valve 13 is in the open configuration.

If the valve 13 is in the closed configuration, the heat exchanger fluid flows through the element 72 and not through the branch 73.

Similarly, if the machine 20 has a second container 62 and a third exchanger 5b associated therewith, what is described above with reference to the flow of heat exchanger fluid through the first expansion element 4a, through the second exchanger 5a, through the heater 200 and the heat exchanger 6a, is also performed on a portion of the flow of heat exchanger fluid flowing out of the first heat exchanger 3 and directed towards the third heat exchanger 5b.

The thermodynamic cycle described above is the one relating to the case where the exchangers 5a and 5b are used to cool the product by means of a thermodynamic inverse Carnot cycle.

On the other hand, if both exchangers 5a and 5b need to be used to heat the product by means of a hot gas cycle, the valves 10a and 10b are closed, whilst the valves 12a and 12b are open.

In such a case, circulating the heat exchanger fluid in the gas state in the compressor 2 causes the heat exchanger fluid in the gas state to be heated in the compressor 2 and to then release heat in the exchangers 5a and 5b.

Also defined according to the invention is a machine 20 for making liquid or semi-liquid food products and which comprises, in combination:
- a processing unit 21 for making a liquid or semi-liquid food product, comprising at least one container 22 and a stirrer 23 mounted inside the at least one container 22; to rotate inside the container 22;
- a thermodynamic system according to any one of the appended claims, operatively associated with the processing unit 21, the second heat exchanger 5a being associated with the at least one container 22 to exchange heat with the product contained in the at least one container 22.

According to another aspect, the machine is a machine for making ice cream and the processing unit 21 is a batch freezing unit.

According to yet another aspect, the machine comprises a second container 62 and a third heat exchanger 5b associated with the second container 62 to exchange heat with the product contained in the second container 62, the third heat exchanger 5b forming part of the circuit of the thermodynamic system according to any one of the appended claims.

It should be stressed that according to the invention, the thermodynamic system might be applied to any kind of machine designed to thermally treat liquid or semi-liquid products.

More precisely, in the machine of figure 1 (depending on whether the valves are open or closed), the product might be treated only in the first container 22 or only in the second container 62 or simultaneously in both the first container 22 and the second container 62.

It should be noted that, more generally speaking, the machine 1 might comprise a single container (22 or 62); in such a case, the thermodynamic system would comprise only one between the second heat exchanger 5a and the third heat exchanger 5b and only one between the pressure reducing element (expansion element) 4a and 4b and only one between the valve 10a and 10b and only one between the valve 12a and 12b.

Also defined according to the invention is a method for thermally treating a liquid or semi-liquid product, comprising the steps of:
A) preparing a machine 20 for making liquid or semi-liquid food products according to any one of the appended claims and placing a liquid or semi-liquid product inside the at least one first container (22);
B) turning on the compressor 2 to convey the heat exchanger fluid along the circuit of the thermodynamic system of the machine to perform a thermodynamic cycle for releasing heat (hot gas thermodynamic cycle) or absorbing heat (vapour compression thermodynamic cycle) to or from the liquid or semi-liquid product inside the at least one container (22);
C) regulating a flow in the temperature reducing device 70 to a value greater than zero in order to cool the compressor 2.

According to another aspect, the step C) of regulating (setting) a flow in the temperature reducing device 70 to a value greater than zero in order to cool the compressor 2 comprises opening the bypass duct 7 to convey and release at least part of the heat exchanger fluid from the first heat exchanger 3 to a heat exchanger fluid inlet I of the compressor 2 or directly inside the compressor 2 so as to cool the compressor 2.

According to another aspect, the step B) of conveying the heat exchanger fluid along the circuit of the thermodynamic system of the machine to perform a thermodynamic cycle includes performing a thermodynamic, inverse Carnot cycle wherein the heat exchanger fluid draws heat from the product contained in the at least one container 22.

According to another aspect, the step B) of conveying the heat exchanger fluid along the circuit of the thermodynamic system of the machine to perform a thermodynamic cycle includes performing a thermodynamic, hot gas cycle wherein the heat exchanger fluid releases heat to the product contained in the at least one container 22.

According to yet another aspect, the method comprises a step of acquiring a triggering parameter and the step C) of regulating a flow in the temperature reducing device 70 to a value greater than zero in order to cool the compressor 2 is performed as a function of the value of the triggering parameter.:
Preferably, the triggering parameter is at least one of the following: a time interval, a temperature value of the compressor 2 of the thermodynamic system 1 or a temperature value of the heat exchanger fluid flowing into the compressor 2.

Advantageously, the thermodynamic system 1 according to this invention allows overcoming the aforementioned drawbacks of the prior art in that it provides an efficient and effective way of reducing the temperature of certain components of the thermodynamic system 1 (more precisely, of the compressor), in use.

Advantageously, thanks to the method and system of the invention, the temperature of the compressor can be limited to a particularly low level, in particular during operation of the thermodynamic system on what is known as a hot gas cycle.

This advantageously reduces compressor wear and increases the reliability and efficiency of the thermodynamic cycle.

## Claims

1. A thermodynamic system for cooling or heating at least a first container (22) containing food products of the liquid or semi-liquid type, comprising a circuit employing a heat exchanger fluid, having at least:
- a compressor (2) having at least one inlet (I) for the heat exchanger fluid and one outlet (U) for the heat exchanger fluid;
- a first heat exchanger (3) connected to the outlet (U) of the compressor (2);
- at least one first expansion element (4a) connected to an outlet of the first heat exchanger (3);
- a second heat exchanger (5a) which can be associated with the first container (22) and which has an inlet (5a') connected to an outlet of the at least one first expansion element (4a);
- a return duct (6) having an inlet portion (6') connected to an outlet of the second heat exchanger (5a) and an outlet portion connected to the inlet (I) of the compressor (2);
- a device (70) for reducing the temperature of the heat exchanger fluid, associated with the circuit for receiving at least a portion of the heat exchanger fluid, having an inlet (70A) and an outlet (70B) and configured to reduce the temperature of the heat exchanger fluid flowing between its inlet (70A) and its outlet (70B), its outlet (70B) being connected in proximity to the heat exchanger fluid inlet (I) of the compressor (2) or inside the compressor (2);
- means (71) for regulating the flow of the heat exchanger fluid traversing the temperature reducing device (70), acting on the flow of the heat exchanger fluid in transit through the device (70) for reducing the temperature of the heat exchanger fluid between a minimum flow configuration and a maximum flow configuration;
**characterised in that** it further comprises:
- a control and drive unit (8) operating on the flow regulating means (71) in order to drive them, wherein the device (70) for reducing the temperature of the heat exchanger fluid comprises a pressure reducing element (72) wherein a branch (73) of the circuit is arranged parallel to the pressure reducing element (72), and the means (71) for regulating the flow in the temperature reducing device (70) comprise a valve (13) acting on the branch (73) of the circuit parallel to the pressure reducing element (72) to close or open the branch (73) of the circuit parallel to the pressure reducing element (72) and wherein the pressure reducing element (72) is disposed along the return duct (6), upstream of the compressor (2), and the valve (13) and branch (73) of the circuit parallel to temperature reducing device (70) are also disposed along the return duct (6), upstream of the compressor (2).

2. The thermodynamic system according to claim 1, comprising:
- a hot-gas duct (11) for carrying out a hot-gas thermodynamic cycle and having an inlet portion (11') connectable to an outlet (U) of the compressor (2) to receive the heat exchanger fluid and an outlet portion connectable to the inlet of the second heat exchanger (5a),
- at least one selective closing element (12a) operatively associated with the hot-gas duct (11) for carrying out a hot-gas thermodynamic cycle and configured to close or open the hot-gas duct (11) so as to inhibit or enable the heat exchanger fluid to circulate inside it, and wherein the control and drive unit (8) is configured to act on the selective closing element (12a) to drive it between a duct (11) closed configuration and a duct (11) open configuration.

3. The thermodynamic system according to claim 1 or claim 2, wherein the control and drive unit (8) is configured to drive the valve (13) into a configuration for closing the branch (73) of the circuit parallel to the pressure reducing element (72) to cool the compressor (2).

4. The thermodynamic system according to any one of the preceding claims, wherein the temperature reducing device (70) comprises a bypass duct (7) which has an inlet portion connected to an outlet of the first heat exchanger (3) to receive the heat exchanger fluid from the first heat exchanger (3) and at least one outlet portion (7a, 7b) connected to the heat exchanger fluid inlet (I) of the compressor (2) or inside the compressor (2).

5. The thermodynamic system according to claim 4, wherein the bypass duct (7) has a first outlet portion (7a) connected inside the compressor (2) to release at least a portion of the heat exchanger fluid flowing out of the bypass duct (7) inside the compressor (2) and a second outlet portion (7b) connected to an end portion of the return duct (6) to release a portion of the heat exchanger fluid flowing out of the bypass duct (7) at the heat exchanger fluid inlet (I) of the compressor (2).

6. The thermodynamic system according to either of claims 4 or 5, wherein the means (71) for regulating the flow of heat exchanger fluid traversing the temperature reducing device (70), comprise at least one bypass valve (9) disposed in the bypass duct (7) and connected to the drive and control unit (8) so that it can be turned on or off to open or close the bypass duct (7) in order to vary the flow of heat exchanger fluid in the bypass duct (7).

7. The thermodynamic system according to any one of the claims 1-6, wherein the drive and control unit (8) comprises a measuring device (8a) adapted to detect a triggering parameter, the drive and control unit (8) being configured to regulate the means (71) for regulating the flow of heat exchanger fluid traversing the temperature reducing device (70) as a function of the value of the triggering parameter detected by the measuring device (8a).

8. The thermodynamic system according to the preceding claim 7, wherein the measuring device (8a) comprises a temperature sensor and the triggering parameter is a temperature value detected near the compressor (2) or inside the compressor.

9. The thermodynamic system according to claim 7 or 8, wherein the measuring device (8a) comprises a temperature sensor and the triggering parameter is a value of the temperature of the heat exchanger fluid at the outlet portion of the return duct (6) connected to the inlet (I) of the compressor (2).

10. The thermodynamic system according to one or more of the preceding claims 1-9, comprising a first cooling valve (10a) interposed between the second heat exchanger (5a) and the first heat exchanger (3) and connected to the drive and control unit (8) so that it can be turned on or off to open or close the inlet portion (5a') of the second heat exchanger (5a) to allow performing a thermodynamic, inverse Carnot cycle.

11. The thermodynamic system according to any one of claims 3-10 and according to claim 2, wherein the at least one selective closing element (12a, 12b) comprises a first heating valve (12a) disposed downstream of the compressor (2) and connected to the drive and control unit (8) so that it can be turned on or off to open or close the outlet portion of the hot-gas duct (11) connectable to the inlet of the second heat exchanger (5a).

12. The thermodynamic system according to one or more of the preceding claims, wherein the circuit further comprises a third heat exchanger (5b) the third heat exchanger (5b) being disposed substantially parallel to the second heat exchanger (5a) between the first heat exchanger (3) and the compressor (2).

13. The thermodynamic system according to the preceding claim 12, comprising at least one second expansion element (4b) disposed at the outlet of the first heat exchanger (3), and wherein the third heat exchanger (5b) has an inlet portion (5b') connected to an outlet of the at least one second expansion element (4b).

14. The thermodynamic system according to claim 12 or 13, comprising a second cooling valve (10b) interposed between the third heat exchanger (5b) and the first heat exchanger (3).

15. The thermodynamic system according to any one of claims 12 to 14 and claim 2, wherein the at least one selective closing element (12a, 12b) comprises a second heating valve (12b) disposed downstream of the compressor (2) and connected to the drive and control unit (8) so that it can be turned on or off to open or close the outlet portion of the hot-gas duct (11) connectable to the inlet of the third heat exchanger (5b).

16. A machine (20) for making liquid or semi-liquid food products, **characterized in that** it comprises, in combination:
- a processing unit (21) for making a liquid or semi-liquid food type product, comprising at least one first container (22) and a stirrer (23) mounted inside the at least one first container (22); to rotate inside the first container (22);
- a thermodynamic system according to any one of the preceding claims, operatively associated with the processing unit (21), the second heat exchanger (5a) being associated with the at least one first container (22) to exchange heat with the product contained in the at least one first container (22).

17. A method for thermally treating a liquid or semi-liquid food product, comprising the steps of:
A) preparing a machine (20) for making liquid or semi-liquid food products according to claim 16 and placing a liquid or semi-liquid product inside the at least one first container (22);
B) turning on the compressor (2) to convey the heat exchanger fluid along the circuit of the thermodynamic system of the machine to perform a thermodynamic cycle for transferring heat to or from the liquid or semi-liquid product inside the at least one first container (22);
C) regulating a flow in the temperature reducing device (70) to a value greater than zero in order to cool the compressor (2).

## Patentansprüche

1. Thermodynamisches System zum Kühlen oder Erhitzen mindestens eines ersten Behälters (22), enthaltend Lebensmittelprodukte des flüssigen oder halbflüssigen Typs, umfassend einen Kreislauf, der ein Wärmetauscherfluid verwendet, aufweisend mindestens:
- einen Verdichter (2), aufweisend mindestens einen Einlass (I) für das Wärmetauscherfluid und einen Auslass (U) für das Wärmetauscherfluid;
- einen ersten Wärmetauscher (3), der mit dem Auslass (U) des Verdichters (2) verbunden ist;
- mindestens ein erstes Expansionselement (4a), das mit einem Auslass des ersten Wärmetauschers (3) verbunden ist;
- einen zweiten Wärmetauscher (5a), der mit dem ersten Behälter (22) assoziiert werden kann und der einen Einlass (5a') aufweist, der mit einem Auslass des mindestens einen ersten Expansionselements (4a) verbunden ist;
- eine Rücklaufleitung (6), aufweisend einen Einlassabschnitt (6'), der mit einem Auslass des zweiten Wärmetauschers (5a) verbunden ist, und einen Auslassabschnitt, der mit dem Einlass (I) des Verdichters (2) verbunden ist;
- eine Vorrichtung (70) zum Reduzieren der Temperatur des Wärmetauscherfluids, die mit dem Kreislauf zum Empfangen von mindestens einem Abschnitt des Wärmetauscherfluids assoziiert ist, einen Einlass (70A) und einen Auslass (70B) aufweist und ausgelegt ist, um die Temperatur des Wärmetauscherfluids zu reduzieren, das zwischen ihrem Einlass (70A) und ihrem Auslass (70B) strömt, wobei ihr Auslass (70B) in der Nähe des Wärmetauscherfluideinlasses (I) des Verdichters (2) oder innerhalb des Verdichters (2) verbunden ist;
- Mittel (71) zum Regulieren des Stroms des Wärmetauscherfluids, das die Temperaturreduziervorrichtung (70) durchquert, das auf den Strom des Wärmetauscherfluids während des Durchgangs durch die Vorrichtung (70) zum Reduzieren der Temperatur des Wärmetauscherfluids zwischen einer minimalen Strömungsauslegung und einer maximalen Strömungsauslegung wirkt;
**dadurch gekennzeichnet, dass** es ferner umfasst:
- eine Steuer- und Antriebseinheit (8), die die Stromreguliermittel (71) bedient, um diese anzutreiben, wobei die Vorrichtung (70) zum Reduzieren der Temperatur des Wärmetauscherfluids ein Druckreduzierelement (72) umfasst, wobei ein Zweig (73) des Kreislaufs parallel zum Druckreduzierelement (72) angeordnet ist, und die Mittel (71) zum Regulieren des Stroms in der Temperaturreduziervorrichtung (70) ein Ventil (13) umfassen, das auf den Zweig (73) des Kreislaufs parallel zum Druckreduzierelement (72) wirkt, um den Zweig (73) des Kreislaufs parallel zum Druckreduzierelement (72) zu schließen oder zu öffnen, und wobei das Druckreduzierelement (72) entlang der Rücklaufleitung (6) stromaufwärts des Verdichters (2) angeordnet ist und das Ventil (13) und der Zweig (73) des Kreislaufs parallel zur Temperaturreduziervorrichtung (70) ebenfalls entlang der Rücklaufleitung (6) stromaufwärts des Verdichters (2) angeordnet sind.

2. Thermodynamisches System nach Anspruch 1, umfassend:
- eine Heißgasleitung (11) zum Durchführen eines thermodynamischen Heißgaszyklus und aufweisend einen Einlassabschnitt (11'), der mit einem Auslass (U) des Verdichters (2) verbindbar ist, um das Wärmetauscherfluid zu empfangen, und einen Auslassabschnitt, der mit dem Einlass des zweiten Wärmetauschers (5a) verbindbar ist,
- mindestens ein selektives Schließelement (12a), das mit der Heißgasleitung (11) betriebswirksam assoziiert ist, um einen thermodynamischen Heißgaszyklus durchzuführen, und dazu ausgelegt ist, die Heißgasleitung (11) zu schließen oder zu öffnen, um das Wärmetauscherfluid darin zu hemmen oder zu ermöglichen, zu zirkulieren, und wobei die Steuer- und Antriebseinheit (8) dazu ausgelegt ist, auf das selektive Schließelement (12a) zu wirken, um es zwischen einer geschlossenen Auslegung der Leitung (11) und einer offenen Auslegung der Leitung (11) anzutreiben.

3. Thermodynamisches System nach Anspruch 1 oder Anspruch 2, wobei die Steuer- und Antriebseinheit (8) ausgelegt ist, um das Ventil (13) in eine Auslegung zum Schließen des Zweigs (73) des Kreislaufs parallel zum Druckreduzierelement (72) anzutreiben, um den Verdichter (2) zu kühlen.

4. Thermodynamisches System nach einem der vorhergehenden Ansprüche, wobei die Temperaturreduziervorrichtung (70) eine Bypassleitung (7) umfasst, die einen Einlassabschnitt, der mit einem Auslass des ersten Wärmetauschers (3) verbunden ist, um das Wärmetauscherfluid vom ersten Wärmetauscher (3) zu empfangen, und mindestens einen Auslassabschnitt (7a, 7b) aufweist, der mit dem Wärmetauscherfluideinlass (I) des Verdichters (2) oder innerhalb des Verdichters (2) verbunden ist.

5. Thermodynamisches System nach Anspruch 4, wobei die Bypassleitung (7) einen ersten Auslassabschnitt (7a), der innerhalb des Verdichters (2) verbunden ist, um wenigstens einen Abschnitt des Wärmetauscherfluids freizugeben, das aus der Bypassleitung (7) innerhalb des Verdichters (2) strömt, und einen zweiten Auslassabschnitt (7b) aufweist, der mit einem Endabschnitt der Rücklaufleitung (6) verbunden ist, um einen Abschnitt des Wärmetauscherfluids freizugeben, das aus der Bypassleitung (7) am Wärmetauscherfluideinlass (I) des Verdichters (2) strömt.

6. Thermodynamisches System nach einem der Ansprüche 4 oder 5, wobei die Mittel (71) zum Regulieren des Stroms des Wärmetauscherfluids, das die Temperaturreduziervorrichtung (70) durchquert, mindestens ein Bypassventil (9) umfassen, das in der Bypassleitung (7) angeordnet und mit der Antriebs- und Steuereinheit (8) verbunden ist, so dass es ein- oder ausgeschaltet werden kann, um die Bypassleitung (7) zu öffnen oder zu schließen, um den Strom des Wärmetauscherfluids in der Bypassleitung (7) zu variieren.

7. Thermodynamisches System nach einem der Ansprüche 1-6, wobei die Antriebs- und Steuereinheit (8) eine Messvorrichtung (8a) umfasst, die angepasst ist, um einen Auslöseparameter zu erfassen, wobei die Antriebs- und Steuereinheit (8) ausgelegt ist, um die Mittel (71) zum Regulieren des Stroms von Wärmetauscherfluid, das die Temperaturreduziervorrichtung (70) durchquert, als eine Funktion des Wertes des Auslöseparameters, der durch die Messvorrichtung (8a) erfasst wird, zu regulieren.

8. Thermodynamisches System nach dem vorhergehenden Anspruch 7, wobei die Messvorrichtung (8a) einen Temperatursensor umfasst und der Auslöseparameter ein Temperaturwert ist, der in der Nähe des Verdichters (2) oder innerhalb des Verdichters erfasst wird.

9. Thermodynamisches System nach Anspruch 7 oder 8, wobei die Messvorrichtung (8a) einen Temperatursensor umfasst und der Auslöseparameter ein Wert der Temperatur des Wärmetauscherfluids am Auslassabschnitt der Rücklaufleitung (6) ist, die mit dem Einlass (I) des Verdichters (2) verbunden ist.

10. Thermodynamisches System nach einem oder mehreren der vorhergehenden Ansprüche 1-9, umfassend ein erstes Kühlventil (10a), das zwischen dem zweiten Wärmetauscher (5a) und dem ersten Wärmetauscher (3) angeordnet ist und mit der Antriebs- und Steuereinheit (8) verbunden ist, so dass es ein- oder ausgeschaltet werden kann, um den Einlassabschnitt (5a') des zweiten Wärmetauschers (5a) zu öffnen oder zu schließen, um die Durchführung eines thermodynamischen, umgekehrten Carnot-Zyklus zu ermöglichen.

11. Thermodynamisches System nach einem der Ansprüche 3-10 und nach Anspruch 2, wobei das mindestens eine selektive Schließelement (12a, 12b) ein erstes Heizventil (12a) umfasst, das stromabwärts des Verdichters (2) angeordnet und mit der Antriebs- und Steuereinheit (8) verbunden ist, so dass es ein- oder ausgeschaltet werden kann, um den Auslassabschnitt der Heißgasleitung (11), die mit dem Einlass des zweiten Wärmetauschers (5a) verbindbar ist, zu öffnen oder zu schließen.

12. Thermodynamisches System nach einem oder mehreren der vorhergehenden Ansprüche, wobei der Kreislauf ferner einen dritten Wärmetauscher (5b) umfasst, wobei der dritte Wärmetauscher (5b) im Wesentlichen parallel zum zweiten Wärmetauscher (5a) zwischen dem ersten Wärmetauscher (3) und dem Verdichter (2) angeordnet ist.

13. Thermodynamisches System nach dem vorhergehenden Anspruch 12, umfassend mindestens ein zweites Expansionselement (4b), das am Auslass des ersten Wärmetauschers (3) angeordnet ist, und wobei der dritte Wärmetauscher (5b) einen Einlassabschnitt (5b') aufweist, der mit einem Auslass des mindestens einen zweiten Expansionselements (4b) verbunden ist.

14. Thermodynamisches System nach Anspruch 12 oder 13, umfassend ein zweites Kühlventil (10b), das zwischen dem dritten Wärmetauscher (5b) und dem ersten Wärmetauscher (3) angeordnet ist.

15. Thermodynamisches System nach einem der Ansprüche 12 bis 14 und Anspruch 2, wobei das mindestens eine selektive Schließelement (12a, 12b) ein zweites Heizventil (12b) umfasst, das stromabwärts des Verdichters (2) angeordnet und mit der Antriebs- und Steuereinheit (8) verbunden ist, so dass es ein- oder ausgeschaltet werden kann, um den Auslassabschnitt der Heißgasleitung (11), die mit dem Einlass des dritten Wärmetauschers (5b) verbindbar ist, zu öffnen oder zu schließen.

16. Maschine (20) zur Herstellung von flüssigen oder halbflüssigen Lebensmittelprodukten, **dadurch gekennzeichnet, dass** sie in Kombination Folgendes umfasst:
- eine Verarbeitungseinheit (21) zum Herstellen eines flüssigen oder halbflüssigen Lebensmittelprodukts, umfassend mindestens einen ersten Behälter (22) und ein Rührwerk (23), das innerhalb des mindestens einen ersten Behälters (22) angebracht ist, um sich innerhalb des ersten Behälters (22) zu drehen;
- ein thermodynamisches System nach einem der vorhergehenden Ansprüche, das mit der Verarbeitungseinheit (21) betriebswirksam assoziiert ist, wobei der zweite Wärmetauscher (5a) mit dem mindestens einen ersten Behälter (22) assoziiert ist, um Wärme mit dem in dem mindestens einen ersten Behälter (22) enthaltenen Produkt auszutauschen.

17. Verfahren zum thermischen Behandeln eines flüssigen oder halbflüssigen Lebensmittelprodukts, umfassend die Schritte:
A) Vorbereiten einer Maschine (20) zum Herstellen von flüssigen oder halbflüssigen Lebensmittelprodukten nach Anspruch 16 und Platzieren eines flüssigen oder halbflüssigen Produkts in dem mindestens einen ersten Behälter (22);
B) Einschalten des Verdichters (2), um das Wärmetauscherfluid entlang des Kreislaufs des thermodynamischen Systems der Maschine zu fördern, um einen thermodynamischen Zyklus zum Übertragen von Wärme zu oder von dem flüssigen oder halbflüssigen Produkt innerhalb des mindestens einen ersten Behälters (22) durchzuführen;
C) Regulieren eines Stroms in der Temperaturreduziervorrichtung (70) auf einen Wert größer als Null, um den Verdichter (2) zu kühlen.

## Revendications

1. Système thermodynamique pour refroidir ou chauffer au moins un premier récipient (22) contenant des produits alimentaires de type liquide ou semi-liquide, comprenant un circuit employant un fluide de l'échangeur de chaleur, comportant au moins :
- un compresseur (2), comportant au moins une entrée (I) pour le fluide de l'échangeur de chaleur et une sortie (U) pour le fluide de l'échangeur de chaleur ;
- un premier échangeur de chaleur (3) relié à la sortie (U) du compresseur (2) ;
- au moins un premier élément d'expansion (4a) relié à une sortie du premier échangeur de chaleur (3) ;
- un deuxième échangeur de chaleur (5a) pouvant être associé au premier récipient (22) et qui comporte une entrée (5a') reliée à une sortie de l'au moins un premier élément d'expansion (4a) ;
- un conduit de reprise (6), comportant une partie d'entrée (6') reliée à une sortie du deuxième échangeur de chaleur (5a) et une partie de sortie reliée à l'entrée (I) du compresseur (2) ;
- un dispositif (70) pour réduire la température du fluide de l'échangeur de chaleur, associé au circuit pour recevoir au moins une partie du fluide de l'échangeur de chaleur, comportant une entrée (70A) et une sortie (70B) et configuré pour réduire la température du fluide de l'échangeur de chaleur circulant entre son entrée (70A) et sa sortie (70B), sa sortie (70B) étant reliée à proximité de l'entrée (I) du fluide de l'échangeur de chaleur du compresseur (2) ou à l'intérieur du compresseur (2) ;
- des moyens (71) pour réguler le débit du fluide de l'échangeur de chaleur traversant le dispositif de réduction de la température (70), agissant sur le débit du fluide de l'échangeur de chaleur en transit à travers le dispositif (70) pour réduire la température du fluide de l'échangeur de chaleur entre une configuration de débit minimum et une configuration de débit maximum ; **caractérisé en ce qu'**il comprend de plus :
- une unité de commande et d'actionnement (8) agissant sur les moyens de régulation du débit (71) afin de les actionner, dans laquelle le dispositif (70) pour réduire la température du fluide de l'échangeur de chaleur comprend un élément de réduction de la pression (72), dans lequel une branche (73) du circuit est disposée parallèlement à l'élément de réduction de la pression (72), et les moyens (71) pour réguler le débit dans le dispositif de réduction de la température (70) comprennent une vanne (13) agissant sur la branche (73) du circuit parallèle à l'élément de réduction de la pression (72) pour fermer ou ouvrir la branche (73) du circuit parallèle à l'élément de réduction de la pression (72) et dans lequel l'élément de réduction de la pression (72) est disposé le long du conduit de reprise (6), en amont du compresseur (2), et la vanne (13) et la branche (73) du circuit parallèle au dispositif de réduction de la température (70) sont également disposées le long du conduit de reprise (6), en amont du compresseur (2).

2. Système thermodynamique selon la revendication 1, comprenant :
- une conduite de gaz chaud (11) pour réaliser un cycle thermodynamique de gaz chaud et comportant une partie d'entrée (11') pouvant être reliée à une sortie (U) du compresseur (2) pour recevoir le fluide de l'échangeur de chaleur et une partie de sortie pouvant être reliée à l'entrée du deuxième échangeur de chaleur (5a),
- au moins un élément de fermeture sélective (12a) associé de manière fonctionnelle à la conduite de gaz chaud (11) pour effectuer un cycle thermodynamique de gaz chaud et configuré pour fermer ou ouvrir la conduite de gaz chaud (11) afin d'empêcher ou de permettre au fluide de l'échangeur de chaleur de circuler à l'intérieur de celui-ci, et dans lequel l'unité de commande et d'actionnement (8) est configurée pour agir sur l'élément de fermeture sélective (12a) pour l'actionner entre une configuration de fermeture de la conduite (11) et une configuration d'ouverture de la conduite (11).

3. Système thermodynamique selon la revendication 1 ou la revendication 2, dans lequel l'unité de commande et d'actionnement (8) est configurée pour actionner la vanne (13) dans une configuration de fermeture de la branche (73) du circuit parallèle à l'élément de réduction de la pression (72) pour refroidir le compresseur (2).

4. Système thermodynamique selon l'une quelconque des revendications précédentes, dans lequel le dispositif de réduction de la température (70) comprend un conduit de dérivation (7), comportant une partie d'entrée reliée à une sortie du premier échangeur de chaleur (3) pour recevoir le fluide de l'échangeur de chaleur du premier échangeur de chaleur (3) et au moins une partie de sortie (7a, 7b) reliée à l'entrée de fluide de l'échangeur de chaleur (I) du compresseur (2) ou à l'intérieur du compresseur (2).

5. Système thermodynamique selon la revendication 4, dans lequel le conduit de dérivation (7) comporte une première partie de sortie (7a) reliée à l'intérieur du compresseur (2) pour libérer au moins une partie du fluide de l'échangeur de chaleur s'écoulant hors du conduit de dérivation (7) à l'intérieur du compresseur (2) et une deuxième partie de sortie (7b) reliée à une partie d'extrémité du conduit de reprise (6) pour libérer une partie du fluide de l'échangeur de chaleur s'écoulant hors du conduit de dérivation (7) en correspondance de l'entrée de fluide de l'échangeur de chaleur (I) du compresseur (2).

6. Système thermodynamique selon l'une quelconque des revendications 4 ou 5, dans lequel les moyens (71) de régulation du débit de fluide de l'échangeur de chaleur traversant le dispositif de réduction de la température (70), comprennent au moins une vanne de dérivation (9) disposée dans le conduit de dérivation (7) et reliée à l'unité d'actionnement et de commande (8) de sorte qu'elle peut être mise en marche ou arrêtée pour ouvrir ou fermer le conduit de dérivation (7) afin de faire varier le débit du fluide de l'échangeur de chaleur dans le conduit de dérivation (7).

7. Système thermodynamique selon l'une quelconque des revendications 1-6, dans lequel l'unité d'actionnement et de commande (8) comprend un dispositif de mesure (8a) adapté pour détecter un paramètre de déclenchement, l'unité d'actionnement et de commande (8) étant configurée pour réguler les moyens (71) de régulation du débit du fluide de l'échangeur de chaleur traversant le dispositif de réduction de la température (70) en fonction de la valeur du paramètre de déclenchement détecté par le dispositif de mesure (8a).

8. Système thermodynamique selon la revendication précédente 7, dans lequel le dispositif de mesure (8a) comprend un capteur de température et le paramètre de déclenchement est une valeur de température détectée à proximité du compresseur (2) ou à l'intérieur du compresseur.

9. Système thermodynamique selon la revendication 7 ou 8, dans lequel le dispositif de mesure (8a) comprend un capteur de température et le paramètre de déclenchement est une valeur de la température du fluide de l'échangeur de chaleur en correspondance de la partie de sortie du conduit de reprise (6) relié à l'entrée (I) du compresseur (2).

10. Système thermodynamique selon une ou plusieurs des revendications précédentes 1-9, comprenant une première vanne de refroidissement (10a) interposée entre le deuxième échangeur de chaleur (5a) et le premier échangeur de chaleur (3) et reliée à l'unité d'actionnement et de commande (8) de sorte qu'elle peut être mise en marche ou arrêtée pour ouvrir ou fermer la partie d'entrée (5a') du deuxième échangeur de chaleur (5a) pour permettre la réalisation d'un cycle de Carnot inverse thermodynamique.

11. Système thermodynamique selon l'une quelconque des revendications 3-10 et selon la revendication 2, dans lequel l'au moins un élément de fermeture sélective (12a, 12b) comprend une première vanne de chauffage (12a) disposée en aval du compresseur (2) et reliée à l'unité d'actionnement et de commande (8) de sorte qu'elle peut être mise en marche ou arrêtée pour ouvrir ou fermer la partie de sortie de la conduite de gaz chaud (11) pouvant être reliée à l'entrée du deuxième échangeur de chaleur (5a) .

12. Système thermodynamique selon une ou plusieurs des revendications précédentes, dans lequel le circuit comprend de plus un troisième échangeur de chaleur (5b), le troisième échangeur de chaleur (5b) étant disposé essentiellement parallèlement au deuxième échangeur de chaleur (5a) entre le premier échangeur de chaleur (3) et le compresseur (2).

13. Système thermodynamique selon la revendication précédente 12, comprenant au moins un deuxième élément d'expansion (4b) disposé à la sortie du premier échangeur de chaleur (3), et dans lequel le troisième échangeur de chaleur (5b) comporte une partie d'entrée (5b') reliée à une sortie de l'au moins un deuxième élément d'expansion (4b).

14. Système thermodynamique selon la revendication 12 ou 13, comprenant une deuxième vanne de refroidissement (10b) interposée entre le troisième échangeur de chaleur (5b) et le premier échangeur de chaleur (3).

15. Système thermodynamique selon l'une quelconque des revendications 12 à 14 et selon la revendication 2, dans lequel l'au moins un élément de fermeture sélective (12a, 12b) comprend une deuxième vanne de chauffage (12b) disposée en aval du compresseur (2) et reliée à l'unité d'actionnement et de commande (8) de sorte qu'elle peut être mise en marche ou arrêtée pour ouvrir ou fermer la partie de sortie de la conduite de gaz chaud (11) pouvant être reliée à l'entrée du troisième échangeur de chaleur (5b) .

16. Machine (20) pour fabriquer des produits alimentaires liquides ou semi-liquides, **caractérisée en ce qu'**elle comprend, en combinaison :
- une unité de traitement (21) pour fabriquer un produit de type alimentaire liquide ou semi-liquide, comprenant au moins un premier récipient (22) et un agitateur (23) monté à l'intérieur de l'au moins un premier récipient (22) ; pour tourner à l'intérieur du premier récipient (22) ;
- un système thermodynamique selon l'une quelconque des revendications précédentes, associé fonctionnellement à l'unité de traitement (21), le second échangeur de chaleur (5a) étant associé à l'au moins un premier récipient (22) pour échanger de la chaleur avec le produit contenu dans l'au moins un premier récipient (22) .

17. Procédé de traitement thermique d'un produit alimentaire liquide ou semi-liquide, comprenant les étapes de :
A) préparer une machine (20) pour fabriquer des produits alimentaires liquides ou semi-liquides selon la revendication 16 et placer un produit liquide ou semi-liquide à l'intérieur de l'au moins un premier récipient (22) ;
B) mettre en marche le compresseur (2) pour transporter le fluide de l'échangeur de chaleur le long du circuit du système thermodynamique de la machine pour effectuer un cycle thermodynamique pour transférer de la chaleur vers le / ou à partir du produit liquide ou semi-liquide à l'intérieur de l'au moins un premier récipient (22) ;
C) réguler un débit dans le dispositif de réduction de la température (70) à une valeur supérieure à zéro afin de refroidir le compresseur (2).
